# EUROPEAN PATENT SPECIFICATION

(11) **EP 3 438 717 B1**
(45) Date of publication and mention of the grant of the patent: **29.09.2021**
(21) Application number: 17306040.1
(22) Date of filing: 03.08.2017
(51) Int. Cl.: G02B 6/44

(54) **CABLE CABINET**
KABELSCHRANK
ARMOIRE DE CÂBLE

(43) Date of publication of application: 06.02.2019
(73) Proprietor: Nexans, 92400 Courbevoie (FR)
(72) Inventor: Andersson, Per-Erik, 51434 Tranemo (SE)
(74) Representative: Ipsilon

(56) References cited:
- EP-A2- 1 304 590
- KR-A- 20170 043 799
- US-A1- 2010 278 500
- US-B1- 6 453 107

## Description

### Technical Field

The present invention relates to a cable cabinet, such as an optical fiber cabinet, and more specifically to a cable cabinet comprising a cassette, such as an optical fiber splice cabinet comprising a cassette.

### Background

Optical fibers are fragile due to their very small diameter, of the order of a few hundred microns, and their structure. The fibers therefore need to be handled with special precautions. First, a number of optical fibers are assembled to form a cable, which can be installed and used. However, the length of the optical fibers is limited, in the order of a few kilometers at most, and since the distance to convey the information carried by the optical fibers is generally greater than the maximum length, it is necessary to connect cables and thus the optical fibers there between. In addition, for connecting the optical fibers to a well-defined location (a house or apartment, for example), the fibers must be separated from the other fibers of the cable in the vicinity of that location.

Cabinets, also referred to as a splice box, splice distributor or connector cabinet, provided with one or several cassettes are therefore used to protect, splice or connect one or more fibers. The cassette as such usually contains at least one opening through which one or more fibers are introduced into the cassettes upon installation. The fibers are then spliced in a conventional manner inside the cassette or in other ways connected to each other. The cassette is mounted in a protecting cabinet that protects the fibers from external impact.

A problem associated with prior art is that the cassettes arranged in the cabinets only have access to cable ducts arranged below the cabinet. In order to install cables or fibers from above the cabinet complex and space consuming solutions and/or additional installation work are required.

There is therefore a need for an improved cabinet which allows for a more flexible installation process allowing easy installation independent of the arrangement of the cabinet.

Patent documents EP-1 304 590-A2 and KR-2017-0043799 disclose different examples of connector cabinets comprising a housing, holding means, and at least a connector cassette that can be positioned such that a first or a second side of the cassette faces the housing.

### Summary

Accordingly, the present invention preferably seeks to mitigate, alleviate or eliminate one or more of the above-identified deficiencies in the art and disadvantages singly or in any combination and solves at least the above mentioned problems by providing an improved connector cabinet. The invention concerns a connector cabinet and a method for adjusting a connector cabinet according to claims 1 and 8, respectively.

Further embodiments of the invention are found in the dependent claims.

In a first aspect, a connector cabinet for connecting cables comprising a housing, holding means and at least one connector cassette with a first side and a second side is provided. The holding means is arranged to connect said at least one connector cassette to the housing of the connector cabinet, and arranged such that the cassette may be positioned such that the first or second side faces the housing of the connector cabinet. One single connector cabinet can thus be used for two different situations instead of having to purchase two specialized cabinets or make complex installation work. Since the cassette can be positioned in two different positions, the cassette is able to receive cables and ducts both from below and from above depending on the configuration of the cabinet. Hence, a more flexible installation process allowing easy installation independent of the arrangement of the cabinet is achieved.

In the present invention the cassette is rotatable around its central axis. The connector cabinet can thus be easily moved between the two different positions. This embodiment eliminates the possible requirements of having to rearrange the connector cabinet into two different parts during the change of position.

The holding means may comprise attachment means that are adjustable so as to permit or deny the cassette to rotate around its central axis. This ensures that the connector cabinet is robust during standard use but still flexible during the installation process.

In one embodiment the connector cabinet is a splice connector and the cassette is a splice cabinet.

In a second aspect, a method for adjusting a connector cabinet from a first position to a second position is provided. The method comprises the steps of providing according to the first aspect being in a first position, rotating the cassette around its central axis and rotating the connector cabinet within a housing plane so that the connector cabinet is in a second position.

The cabinet allows for a greater degree of freedom with regard to the fibers arranged therein. By a simple installation step, the cabinet can be arranged such that the at least one cassette arranged therein is optimized for receiving fibers from above instead of from below. The cabinet thus allows for a simpler installation process and can be used both for receiving fibers from above and from below.

### Brief Description of Drawings

These and other aspects, features and advantages of which the invention is capable of will be apparent and elucidated from the following description of embodiments of the present invention, reference being made to the accompanying drawings, in which
Fig. 1a is an isometric view of a connector cabinet being in a first cabinet position where the cassette is in a first cassette position according to an embodiment;
Fig. 1b is an isometric view of a connector cabinet being in a first cabinet position where the cassette is in a second cassette position according to an embodiment;
Fig. 1c is an isometric view of a connector cabinet being in a first cabinet position where the cassette is in a third cassette position according to an embodiment;
Fig. 1d is an isometric view of a connector cabinet being in a first cabinet position where the cassette is in a fourth position according to an embodiment;
Fig. 2 is an isometric view of a connector cabinet being moved from a first to a second cabinet position according to an embodiment;
Fig. 3a is an isometric view of a connector cabinet being in a second cabinet position where the cassette is in a fifth cassette position according to an embodiment;
Fig. 3b is an isometric view of a connector cabinet being in a second cabinet position where the cassette is in a sixth cassette position according to an embodiment; and
Fig. 4 is a block scheme of a method for arranging a connector cabinet from a first position to a second position according to an embodiment.

### Detailed Description

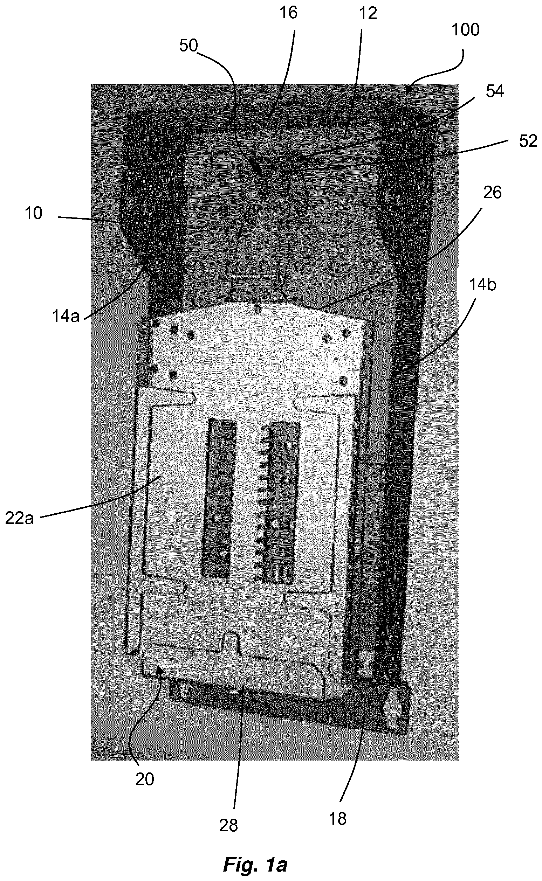

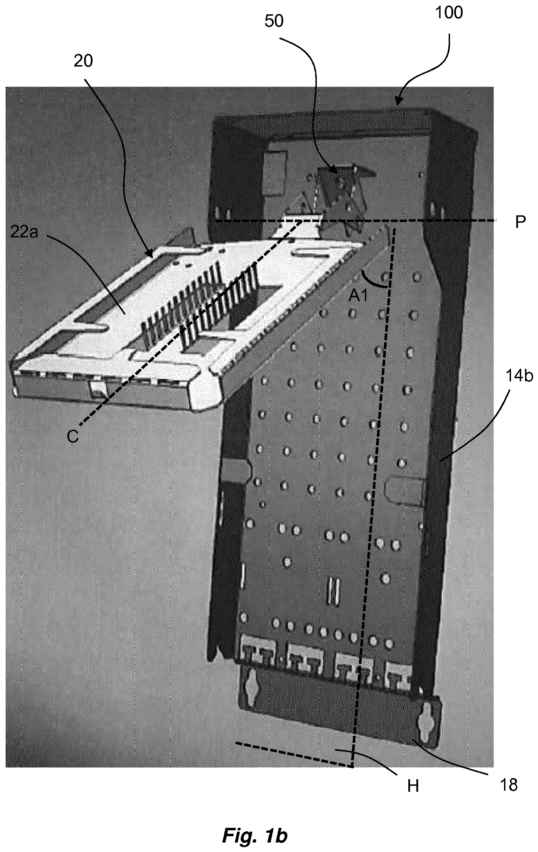

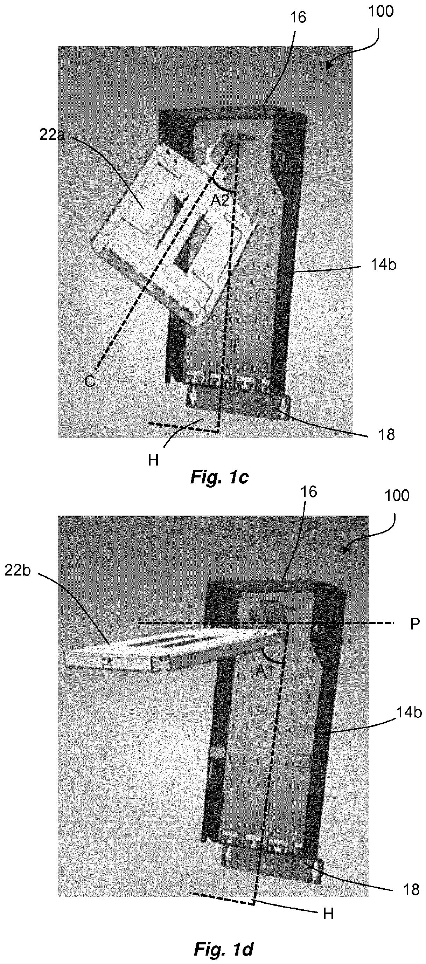

An embodiment of a connector cabinet 100 is shown in Fig. 1 having a housing 10. The connector cabinet 100 further comprises a connector cassette 20 having a first side 22a and a second side 22b, and holding means 50 arranged to connect the connector cassette 20 and the housing 10 of the connector cabinet 100. The housing 10 comprises a bottom side 12 arranged to be attached to a wall in or on the building to which the connector cabinet 100 is arranged. The bottom side 12 is thus substantially flat. The holding means 50 is preferably arranged at the bottom side 12 of the housing 10 which will soon be discussed more in detail.

The housing 10 may further comprise two side walls 14a, 14b and a top wall 16. The housing may further comprise a bottom wall 18. The side walls 14a, 14b may be longitudinal walls and the top wall 16 is perpendicular to the bottom side. The bottom wall 18 is aligned with the bottom side.. In some embodiment the housing 10 further comprises a removable top portion (not shown) that covers and protects the interior of the housing 10.

The bottom side 12 of the housing 10 may comprise a plurality of openings or holes. These holes may be used to coil or gather optical fibers. The connector cabinet 100 may thus comprise means for coiling optical fibers. In one embodiment the coiling means may be holes arranged on the bottom side 12 of the housing 10 to which attachment means such as bundling straps can be arranged in order to coil and gather the optical fibers.

The housing 10 may be constructed by metal and/or a plastic material. Preferably, the housing 10 is constructed by a metal such as steel. In one embodiment the steel is powder coated with a galvanized sheet material. The material of the housing 10 shall be such that the connector cabinet 100 can be used inside and/or outside. The connector cabinet could for example be arranged on a wall in a building, in a cable cabinet or a ground cabinet arranged outside.

In some embodiments, where the connector cabinet 100 is used in public areas, the cabinet 100 may further comprise locking means (not shown) such as locking cylinder or the like.

The connector cabinet 100 may comprise one or several connector cassettes 20. This allows for adaptation of the numbers of fibers that can be connected or spliced. The connector cabinet 100 being in the form of a splice cabinet may for example be able to splice up to 48, 96 or 192 fibers.

In the following, the connector cabinet 100 arranged for connecting cables will be referred to as a splice cabinet 100 having a splice cassette 20 used to splice optical fibers. However, it should be understood that the connector cabinet could be any type of cabinet, such as for example a cabinet that connects copper wires.

An embodiment of a splice cassette 20 will now be described, but any type of cassette could be used with the inventive holding means 50. The cassette 20 has a substantially rectangular parallelepiped shape. The cassette 20 comprises a first side 22a, also referred to as the front side 22a, and a second side 22b, also referred to as the backside 22b (see Fig. Id). The cassette 20 further has two lateral sides 24a, 24b, a bottom end 28 and a top end 26. The two lateral sides 24a, 24b are arranged opposite each other and the bottom end 28 and the top end 26 are arranged opposite each other. The bottom end 28 of the cassette is arranged in the vicinity of the bottom wall 18 of the housing 10 and the top end 26 of the cassette is arranged in the vicinity of the top wall 16 of the housing 10. In the position of the cassette 20 shown in Fig. 1a, the backside 22b of the cassette 20 is facing the bottom side 12 of the housing 10.

The cassette 20 may further comprise an inlet for inputting a cable of optical fibers, composed mainly of a plurality of optical fibers surrounded by a protective sheath, in the cassette 20 and an exit for outputting individual cables of optical fibers out from the cassette 20. Preferably, the inlet and the exit are sealed against both water and air.

In some embodiments, the cassette 20 is provided with breakable openings used as inlets and exits. By using breakable openings, the same type of cabinets can be used for different fiber configurations. Additionally, due to the sealing the cassette 20 is subjected to as little external impact as possible from the environment, as only the necessary openings are opened. The openings could be provided at the any of the two lateral sides 24a, 24b and/or the bottom end 28 of the cassette 20.

As already mentioned, the splice cabinet 100 may comprise means for coiling optical fibers. In some embodiments, the coiling means may be arranged in the cassette instead of the housing of the splice cabinet 100. The coiling means may for example be constituted by two identical drums arranged on the backside 22b of the cassette 20, where the drums are designed to accommodate optical fiber coiled in the shape of "8" around the drums.

The holding means 50 as illustrated in Figs. 1-3 is arranged, directly or indirectly, on the bottom side 12 of the housing 10. However, in other embodiments the holding means 50 may be arranged on the top wall 16 of the housing 10 of the cabinet 100. The other end of the holding means 50 is arranged on or adjacent to the top end 26 of the cassette 20. The holding means 50 may be arranged directly to housing 10 or by a protruding portion 54 or similar arrangement that is arranged on the housing 10.

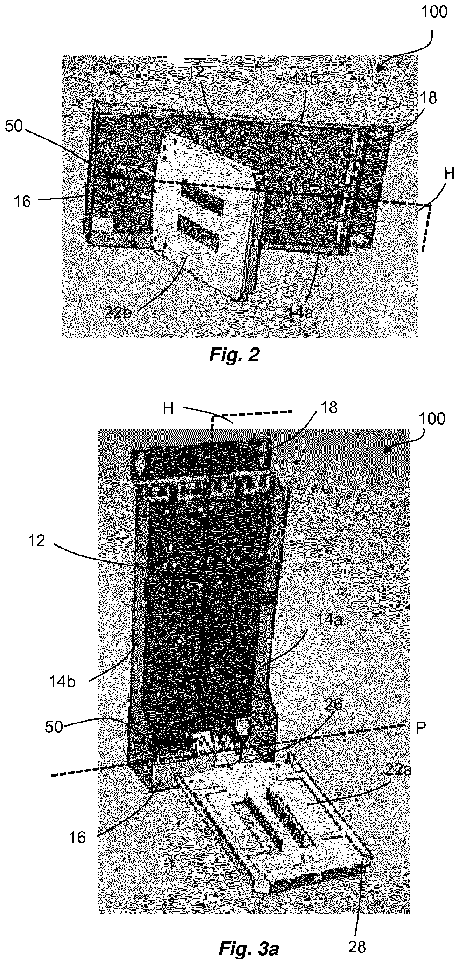

The holding means 50 allows for movement of the cassette 20. The cassette 20 can thus be moved into different positions, as illustrated in Figs. 1a-d and Figs. 3a-b. Preferably, the holding means 50 is arranged such that the cassette 20 is allowed to be positioned in two main positions, one position where the first side 22a faces the housing 10 and another position where the second side 22b faces the housing 10. The change of position can be achieved in several ways, for example by detaching the holding means 50 from the housing 10 and/or from the cassette 20. Additionally or alternatively, the position of the cassette 20 may be changed by rotating it around its central axis. The different alternatives will now be described more in detail.

In some embodiments, the holding means 50 is detachably arranged to the cassette 20. This allows the user to easily change the cassette, add further cassettes to the cabinet 100 and/or change the position of the cassette 20. Hence, having a holding means 50 that is detectably arranged to the cassette 20 allows the cassette 20 to be moved between a first and a second position. In this embodiment, the holding means 50 may be detached in order to turn the cassette such that the first or second side faces the housing 10 and once the desired position is achieved, the holding means 50 is again attached to the cassette 20. The holding means 50 may be detachably arranged to the cassette 20 using attachment means such as screws and bolts. Hence in one embodiment, the user loses and withdraws the screw or bolt from the holding means 50 in order to change position of the cassette 20, and attaches and fastens the screw or bolt once the cassette is 20 in the desired position.

In other embodiments, the cassette 20 cannot be removed from the holding means 50 and the cassette 20 and the holding means 50 are thus fixedly arranged to each other.

In one embodiment, the holding means 50 is detachably arranged to the housing 10 of the cabinet 100. In this way, the position of the holding means 50 and its attached cassette 20 is movable and/or the attached cassette 20 can be changed. Hence, having a holding means that is detectably arranged to the housing allows the cassette 20 to be moved between a first and a second position. In this embodiment, the holding means 50 may be detached in order to turn the cassette such that the first or second side faces the housing 10 and once the desired position is achieved, the holding means 50 is again attached to the housing 10 of the cabinet 100. The holding means 50 may be detachably arranged to the housing 10 using attachment means such as screws and bolts, or by using a groove configuration. The groove configuration may comprise a groove and a corresponding protrusion arranged to be connected to the groove so as to arranged the holding means 50 to the housing 10.

In an alternative embodiment, the holding means 50 is fixedly arranged to the housing 10 of the cabinet 100.

In one embodiment the holding means 50 comprises at least two portions that are hinged together, in the embodiment shown in Fig. 1a the holding means 50 comprises two pairs of two portions that are hinged together.

The holding means 50 may comprise a hinge, and more specifically a plate hinge. Additionally or alternatively, the holding means 50 may a ball and socket joint or any other arrangement that allows the cassette 20 to pivot and to rotate around its central axis C.

In some embodiments the holding means 50 comprises attachment means 52. The attachment means 52 can be adjusted so as to permit or deny the cassette to rotate around its central axis C. In one embodiment the attachment means 52 is a screw fixation, and the adjustment thus comprises loosening, fastening or removing the screw.

In Figs. 1a-b the cabinet is a first cabinet position ready to be used for cables and ducts that need access to the cabinet from below. In Figs. 3a-b the cabinet is in a second cabinet position ready to be used for cables and ducts that need access to the cabinet from above. Figs. 1c-d and 2 represents the steps needed in order to be able to arranged from a first cabinet position to a second cabinet position or vice versa.

In Figs. 1a-d the splice cabinet 100 is arranged in a first cabinet position. In a first cabinet position the housing 10 is arranged so that the top wall 16 faces upwards, i.e. away from the floor or ground arranged below the cabinet 100. In this position, the cables or ducts have access to the cassette through the bottom end 28 of the cassette 20.

Fig. 1a illustrates a situation where the cassette 20 is arranged in a first cassette position. In the first cassette position, the backside 22b of the cassette 20 is facing the bottom side 12 of the housing 10. Additionally, the cassette 20 and the housing 10 extend in basically the same direction.

Fig. 1b illustrates a situation where the splice cassette 20 is arranged in a second cassette position. In the second cassette position, the cassette 20 is arranged such that an angle A1 is created between its plane and the housing plane H created by bottom side 12 of the housing 10. In the second cassette, position the angle A1 may vary from 1 to almost 180 degrees, and more preferably from 1 to 45 degrees. The holding means 50 is thus arranged to pivot the cassette around a pivot axis P. The pivot axis P extends in a direction parallel to the housing plane H.

The first side, e.g. front side 22a, of the cassette 20 is at least in part facing up towards the top wall 16 and the backside 22b of the cassette is at least in part facing down towards the floor or ground.

In Fig. 1c, the cassette 20 is shown in a third cassette position. The holding means 50 is arranged such that the cassette 20 is able to move around its central axis C. During the movement an angle A2 is created between the central axis C of the cassette 20 and the housing plane H. The holding means 50 may move the cassette 20 from a position where the backside 22b, i.e. the second side, of the cassette 20 is facing upwards to a position where the front side 22a, i.e. the first side, of the cassette is facing upwards.

Fig. 1d, illustrates the cassette in a fourth position. The fourth cassette position is the same as the second cassette position, but where the cassette has been turned 180 degrees around its central axis. Hence, the first side 22a of the cassette 20 is facing the bottom side 12 of the housing 10 and/or the floor or ground on which the splice cabinet is arranged above. In the fourth cassette position, the cassette 20 is arranged such that an angle A1 is created between its plane and the bottom side 12 of the housing 10. In the second cassette position the angle A1 may vary from 1 to 180 degrees, and more preferably from 1 to 45 degrees.

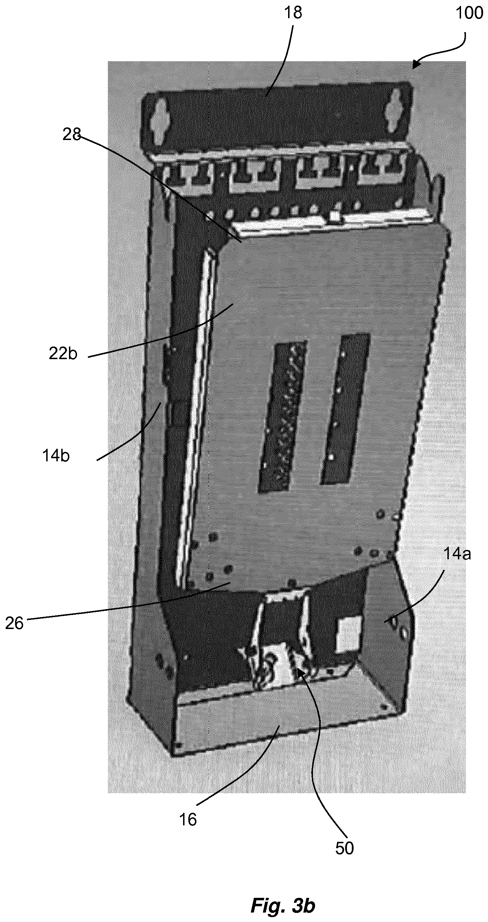

As has been illustrated in Figs. 1a-d and Figs. 3a-b, in one embodiment the holding means 50 is configured to be able to move the cassette around its central axis as well as moving the cassette around the axis P that is parallel to the bottom side 12 of the housing 10. This has several benefits, as already have been described and will be even more apparent with reference to Figs. 2 and 3.

In Fig. 2, the splice cabinet 100 is rotated from a first cabinet position towards a second cabinet position. The cabinet 100 is rotated within the housing plane H of the housing 10, i.e. turning the direction of the top wall 16 of the housing to face up or down. The orientation of the splice cabinet 100 is changed so as to change the access (from below or above) to the cassette 20 in the splice cabinet 100.

Figs. 3a-b illustrates a cabinet being in a second cabinet position. In a second cabinet position, the housing 10 is arranged so that the top wall 16 of the housing 10 faces downwards, i.e. towards the floor or ground arranged below the cabinet 100. In relation to the first cabinet position, the cabinet 100 has been turned 180 degrees in the housing plane H. In this position, the cables or ducts have access from above to the cassette through the bottom end 28 of the cassette 20.

Fig. 3a illustrates a situation where the splice cassette 20 is arranged in the fifth cassette position and the cabinet is in a second cabinet position. In the fifth cassette position, the cassette 20 is arranged such that an angle A1 is created between its plane and the housing plane H created by bottom side 12 of the housing 10. In the second cassette position the angle A1 may vary from 1 to almost 180 degrees, and more preferably from 1 to 45 degrees. The holding means 50 is thus arranged to pivot the cassette around the pivot axis P. The pivot axis P extends in a direction parallel to the housing plane H. The fifth cassette position is thus the same as the second cassette position, with the exception that the front side 22a of the cassette 20 is at least in part facing up towards the bottom wall 18 and the backside 33b of the cassette is at least in part facing up away from the floor or ground. Hence, the difference between the fifth and second cassette position is that in the fifth position the cassette 20 is rotated 180 degrees around its central axis C compared to the second cassette position.

Fig. 3b illustrates a situation where the splice cassette 20 is arranged in a sixth cassette position and the cabinet is in a second cabinet position. In a sixth cassette position, the front side 22a of the cassette 20 is facing the bottom side 12 of the housing 10. Hence, the backside 22b of the cassette 20 is facing the outside, or in some embodiments facing the top portion of the housing. Additionally, the cassette 20 and the housing 10 extend in basically the same direction. The sixth cassette position is thus the same as the first cassette position, with the exception that the front side 22a of the cassette 20 is facing the bottom side 12 of the housing 10.

Hence Fig. 3a-b illustrates the cabinet 100 being ready to use for situations where it is preferred to gain access to the cassette 20 from above whereas Fig. 1a-b illustrates the cabinet 100 being ready to use for situations where it is preferred to gain access to the cassette 20 from below. In order to change between the two cabinet positions the cassette 20 has to be turned around its central axis C as described with reference to Fig. 1c.

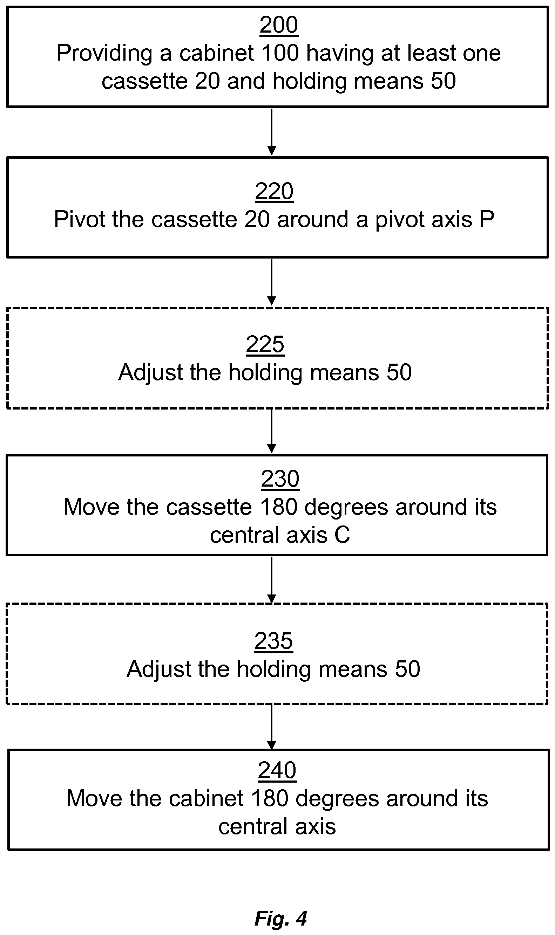

A method for arranging a cabinet 100 from a first position to a second position is shown in Fig. 4. A cabinet 100 having at least one cassette 20 as described herein is provided 200. In a next step, the cassette 20 is pivoted 220 around a pivot axis P. The pivot axis P extends in a direction parallel to the housing plane H. Further, the cassette is moved 230 or otherwise rotated 180 degrees around its central axis C. In a next step, the cabinet is moved 240 or rotated 180 degrees within the housing plane H.

In some embodiments attachment means 52 in the holding means 50 needs to be removed or loosened in order to be able to move or rotate the cassette around its central axis C. If this is the case, the method further comprises the optional step of adjusting 225 the holding means 50 such that it allows the cassette to rotate around its central axis C before the step 230 of moving the cassette around its axis. In one embodiment the adjustment of the holding means 50 comprises loosening the attachment means, being a screw fixation, so that the cassette is allowed to rotate.

In a further step, also being optional, the holding means 50 is adjusted to fixate the cassette in its new position. This may be done directly after the step 230 of moving the cassette is done or after the step 240 where the cabinet is moved around its central axis. In one embodiment the adjustment of the holding means 50 comprises fastening the attachment means, being a screw fixation, so that the cassette is no longer allowed to rotate.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A connector cabinet (100) for connecting cables comprising a housing (10), holding means (50) and at least one connector cassette (20) with a first side (22a) and a second side (22b), wherein said holding means (50) is arranged to connect said at least one connector cassette (20) to the housing (10) of the connector cabinet (100), and arranged such that the cassette (20) may be positioned such that the first or second side (22a, 22b) faces the housing (10), wherein the holding means (50) is further arranged such that the cassette (20) is pivotable around a pivot axis (P), said cabinet **characterized in that** the cassette (20) is rotatable around its central axis (C).

2. The cabinet (100) according to claim 1, wherein the cassette (20) is movable 180 degrees around its central axis (C).

3. The cabinet (100) according to claims 1 or 2, wherein said pivot axis (P) extends in a direction parallel to the plane of the connector cabinet (H).

4. The cabinet (100) according to any of claims 1 to 3, wherein the holding means (50) comprises attachment means (52) that are adjustable so as to permit or deny the cassette (20) to rotate around its central axis (C).

5. The cabinet (100) according to claim 4, wherein the attachment means (52) is a screw fixation.

6. The cabinet (100) according to any one of the preceding claims, wherein the holding means (50) comprises at least one hinge.

7. The cabinet (100) according to any one of the preceding claims, wherein the housing (10) comprises a bottom side (12) for attachment to a wall, wherein the holding means (50) is arranged at the bottom side (12) of the housing (10).

8. A method for adjusting a connector cabinet (100) from a first position to a second position comprising the steps of:
providing (200) a connector cabinet (100) according to any of claims 1 to 8 being in a first position;
rotating (230) the cassette (20) around its central axis (C);
rotating (240) the connector cabinet (100) within a housing plane (H);
such that the connector cabinet (100) is in a second position, wherein the method further comprises, before rotating the cassette around its central axis, the step of pivoting (220) the cassette (20) around a pivot axis (P).

9. The method according to claim 8,
wherein the method further comprises, before the step of rotating the cassette around its central axis, the step of (225) adjusting the holding means (50) such that it allows the cassette to rotate around its central axis (C).

10. The method according to claim 9,
wherein the holding means (50) comprises attachment means in the type of a screw fixation, wherein the adjusting step comprises loosening the screw fixation.

11. The method according to claim 9 or 10,
wherein the method further comprises, after the step of rotating the cassette around its central axis, the step of (235) adjusting the holding means (50) such that it denies the cassette to rotate around its central axis (C).

12. The method according to claim 11,
wherein the holding means (50) comprises attachment means in the type of a screw fixation, wherein the adjusting step comprises fastening the screw fixation.

## Patentansprüche

1. Steckergehäuse (100) für Anschlusskabel, umfassend:
ein Gehäuse (10), Haltemittel (50) und mindestens eine Steckerkassette (20) mit eine ersten Seite (22a) und einer zweiten Seite (22b),
wobei das Haltemittel (50) derart angeordnet ist, dass es die mindestens eine Steckerkassette (20) mit dem Gehäuse (10) des Steckergehäuses (100) verbindet und die Kassette (20) so positioniert werden kann, dass die erste oder zweite Seite (22a, 22b) dem Gehäuse (10) zugewandt ist, wobei das Haltemittel (50) ferner derart angeordnet ist, dass die Kassette (20) um eine Schwenkachse (P) schwenkbar ist,
wobei das Steckergehäuse **dadurch gekennzeichnet ist, dass** die Kassette (20) um deren Mittelachse (C) rotierbar ist.

2. Gehäuse (100) nach Anspruch 1, wobei die Kassette (20) in 180 ° um deren Mittelachse (C) beweglich ist.

3. Gehäuse (100) nach Anspruch 1 oder 2, wobei die Schwenkachse (P) sich parallel zur Ebene des Steckergehäuses (H) erstreckt.

4. Gehäuse (100) nach einem der Ansprüche 1 - 3, wobei das Haltemittel (50) Befestigungsmittel (52) umfasst, die derart anpassbar sind, dass die Rotation der Kassette (20) um deren Mittelachse (C) ermöglicht oder verhindert wird.

5. Gehäuse (100) nach Anspruch 4, wobei das Befestigungsmittel (52) eine Verschraubung ist.

6. Gehäuse (100) nach einem der vorstehenden Ansprüche, wobei das Haltemittel (50) mindestens ein Scharnier umfasst.

7. Gehäuse (100) nach einem der vorstehenden Ansprüche, wobei das Gehäuse (10) eine Unterseite (12) zur Befestigung an einer Wand umfasst, wobei das Haltemittel (50) auf der Unterseite (12) des Gehäuses (10) angeordnet ist.

8. Verfahren zur Verschiebung eines Steckergehäuses (100) von einer ersten in eine zweite Stellung, umfassend die Schritte:
Vorsehen (200) eines Steckergehäuses (100) nach einem der Ansprüche 1 - 8 in einer ersten Stellung;
Rotieren (230) der Kassette (20) um deren Mittelachse (C);
Rotieren (240) des Steckergehäuses (100) innerhalb einer Gehäuseebene (H);
sodass das Steckergehäuse (100) sich in einer zweiten Stellung befindet, wobei das Verfahren vor dem Rotieren der Kassette um deren Mittelachse ferner umfasst: Schwenken der Kassette (20) um eine Schwenkachse (P).

9. Verfahren nach Anspruch 8,
wobei das Verfahren ferner umfasst:
vordem Rotieren der Kassette um deren Mittelachse: Anpassen (225) des Haltemittels (50), sodass der Kassette das Rotieren um deren Mittelachse (C) ermöglicht wird.

10. Verfahren nach Anspruch 9, wobei das Haltemittel (50) umfasst:
Befestigungsmittel in der Art einer Verschraubung, wobei das Anpassen umfasst: Lockern der Verschraubung.

11. Verfahren nach Anspruch 9 oder 10, wobei das Verfahren ferner umfasst:
nach dem Rotieren der Kassette um deren Mittelachse: Anpassen (235) des Haltemittels (50), sodass das Rotieren der Kassette um deren Mittelachse (C) verhindert wird.

12. Verfahren nach Anspruch 11, wobei das Haltemittel (50) Befestigungsmittel in der Art einer Verschraubung umfasst, wobei das Anpassen umfasst: Befestigen der Verschraubung.

## Revendications

1. Logement de connecteur (100) destiné à relier des câbles comprenant un boîtier (10), un moyen de support (50) et au moins une cassette de connecteur (20) avec un premier côté (22a) et un second côté (22b), dans lequel ledit moyen de support (50) est prévu pour relier ladite au moins une cassette de connecteur (20) au boîtier (10) du logement de connecteur (100), et est disposé de sorte que la cassette (20) puisse être positionnée de sorte que le premier ou le second côté (22a, 22b) soit tourné vers le boîtier (10), dans lequel le moyen de support (50) est en outre prévu de sorte que la cassette (20) puisse pivoter autour d'un axe de pivotement (P), ledit logement étant **caractérisé en ce que** la cassette (20) peut tourner autour de son axe central (C).

2. Logement (100) selon la revendication 1, dans lequel la cassette (20) est mobile à 180 degrés autour de son axe central (C).

3. Logement (100) selon la revendication 1 ou 2, dans lequel ledit axe de pivotement (P) s'étend dans une direction parallèle au plan du logement de connecteur (H).

4. Logement (100) selon l'une quelconque des revendications 1 à 3, dans lequel le moyen de support (50) comprend un moyen de fixation (52) qui est réglable de façon à permettre ou à empêcher la cassette (20) de pivoter autour de son axe central (C).

5. Logement (100) selon la revendication 4, dans lequel le moyen de fixation (52) est une fixation à vis.

6. Logement (100) selon l'une quelconque des revendications précédentes, dans lequel le moyen de support (50) comprend au moins une charnière.

7. Logement (100) selon l'une quelconque des revendications précédentes, dans lequel le boîtier (10) comprend un côté inférieur (12) destiné à la fixation sur un mur, dans lequel le moyen de support (50) est prévu au niveau du côté inférieur (12) du boîtier (10).

8. Procédé de réglage d'un logement de connecteur (100) d'une première position vers une seconde position comprenant les étapes consistant à :
prévoir (200) un logement de connecteur (100) selon l'une quelconque des revendications 1 à 8 dans une première position ;
faire pivoter (230) la cassette (20) autour de son axe central (C) ;
faire pivoter (240) le logement de connecteur (100) sur un plan de boîtier (H) ;
de sorte que le logement de connecteur (100) se trouve dans une seconde position, dans lequel le procédé comprend en outre, avant de faire pivoter la cassette autour de son axe central, l'étape de pivotement (220) de la cassette (20) autour d'un axe de pivotement (P).

9. Procédé selon la revendication 8, dans lequel le procédé comprend en outre, avant l'étape de pivotement de la cassette autour de son axe central, l'étape (225) de réglage du moyen de support (50) de sorte qu'il permette à la cassette de pivoter autour de son axe central (C).

10. Procédé selon la revendication 9, dans lequel le moyen de support (50) comprend un moyen de fixation de type à vis, dans lequel l'étape de réglage comprend le desserrage de la fixation à vis.

11. Procédé selon la revendication 9 ou 10, dans lequel le procédé comprend en outre, après l'étape de pivotement de la cassette autour de son axe central, l'étape (235) de réglage du moyen de support (50) de sorte qu'il empêche la cassette de pivoter autour de son axe central (C).

12. Procédé selon la revendication 11, dans lequel le moyen de support (50) comprend un moyen de fixation de type à vis, dans lequel l'étape de réglage comprend le serrage de la fixation à vis.
